# EUROPEAN PATENT APPLICATION

(11) **EP 3 308 893 A1**
(43) Date of publication of application: **18.04.2018**
(21) Application number: 15894987.5
(22) Date of filing: 12.06.2015
(51) Int. Cl.: B23H 9/14, B23H 7/26

(54) **SMALL-HOLE ELECTRIC DISCHARGE MACHINING MACHINE**

(71) Applicant: Makino Milling Machine Co., Ltd., Tokyo 152-8578 (JP)
(72) Inventor: NAGASE, Tomohiro, Aiko-gun Kanagawa 243-0303 (JP)
(74) Representative: McWilliams, David John
(86) International application number: PCT/JP2015/067074
(87) International publication number: WO 2016/199302

(57) **Abstract**

This small-hole electric discharge machining machine (30) for electric discharge machining of a workpiece (20) by use of a rod-like or pipe-like electrode (10) is equipped with: a first support part (7) for supporting the base side of the electrode (10); a second support part (8) for supporting the tip side of the electrode (10); and an intermediate guide device (50) that is disposed between the first support part (7) and the second support part (8), and guides the electrode (10). The intermediate guide device (50) is equipped with: a guide part (51) that has an open form and a closed form, and guides the electrode (10) when in the closed form; a driving means (55) for causing the guide part (51) to transition between the open form and the closed form; and a biasing means (59) for biasing the guide part (51) in the closing direction when the guide part (51) is in the closed form.

## Description

### Technical Field

The present invention relates to a small-hole electric discharge machining machine, more specifically relates to a small-hole electric discharge machining machine having an intermediate guide device guiding an intermediate part of a long extending electrode.

### Background Art

PLT 1 describes an intermediate guide mechanism of a type gripping an intermediate part of an electrode of a small-hole electric discharge machining machine. There, the amount of grip of a pair of gripping members able to open and close to grip the electrode is made adjustable. For this reason, according to this intermediate guide device, the problem, when gripping a thin electrode, of an excessive force acting on the electrode and the electrode being damaged can be avoided.

### Citation List

### Patent Literature

PLT 1: Japanese Unexamined Patent Publication No. 2009-166188A

### Summary of Invention

### Technical Problem

In the intermediate guide mechanism shown in PLT 1, the force generated from coil springs is used for moving the gripping members from the open state to the closed state and for gripping the electrode in the closed state. For this reason, in particular when the electrode is thin, it has been considered difficult to reliably move the members from the open state to the closed state using springs generating the small force suitable for gripping the electrode. In other words, the force of springs large enough to make the intermediate guide mechanism stably operate is excessive for a particularly thin electrode. For this reason, it may cause damage to the electrode. This intermediate guide device is also made adjustable in amount of grip of the pair of gripping members, but according to this structure, it appears difficult to sufficiently secure a possible range of adjustment.

The present invention is made in view of the above situation and has for its object to provide a small-hole electric discharge machining machine provided with a high reliability intermediate guide device stably operating without causing excessive force to act on an electrode.

### Solution to Problem

To solve the above problem, according to the present invention, there is provided a small-hole electric discharge machining machine using a rod-shaped or pipe-shaped electrode to machine a workpiece, the small-hole electric discharge machining machine comprising a first support part supporting a base end side of the electrode, a second support part supporting a front end side of the electrode, and an intermediate guide device disposed between the first support part and the second support part and guiding the electrode, the intermediate guide device comprising a guide part having an open state and closed state and guiding the electrode in the closed state, a driving means making the guide part move between the open state and closed state, and biasing means biasing the guide part in a closing direction when the guide part is in the closed state.

According to this, the force generated by the driving means is used for moving the guide part between the open state and closed state, while the force of the biasing means is used for maintaining the closed state. For this reason, it becomes possible to make the guide part reliably move between the open state and closed state, while the force required for maintaining the closed state, that is, the force required for guiding the electrode, can be desirably set.

In the present invention, the intermediate guide device may further comprises a stopper part receiving a thrust generated by the driving means so that the thrust does not act on the guide part when the guide part is in the closed state.

In the present invention, the guide part of the intermediate guide device may comprises a pair of fingers forming the open state and the closed state, the pair of fingers also forming a guide hole for guiding the electrode by cutaways parts which they have combining in the closed state. The guide hole is formed so that a clearance is formed between an inside wall of the guide hole and the electrode when the electrode is thinner than a predetermined diameter and so that the electrode abuts against the inside wall of the guide hole when the electrode is thicker than the predetermined diameter, and when the electrode is thicker than the predetermined diameter, the biasing force generated by the biasing means can act on the electrode through the pair of fingers.

According to this, it becomes possible to guide a broad range of diameters of electrodes from a relatively thin electrode of less than the predetermined diameter to a relatively thick electrode of the predetermined diameter or more without replacing the fingers.

### Brief Description of Drawings

FIG. 1 is a schematic front view of a small-hole electric discharge machining machine according to the present embodiment.
FIG. 2 is an enlarged perspective view of principal parts of the small-hole electric discharge machining machine shown in FIG. 1.
FIG. 3 is a schematic plan view of an intermediate guide device of the small-hole electric discharge machining machine, where a guide part of the intermediate guide device is in an open state.
FIG. 4 is a schematic longitudinal sectional view of the intermediate guide device shown in FIG. 3.
FIG. 5 is a schematic longitudinal sectional view of the intermediate guide device similar to FIG. 4, but where the guide part is in a closed state.
FIG. 6 is a schematic longitudinal sectional view of the intermediate guide device similar to FIG. 5 where the guide part is in the closed state, while the guide part grips an electrode thicker than a predetermined diameter.

### Description of Embodiments

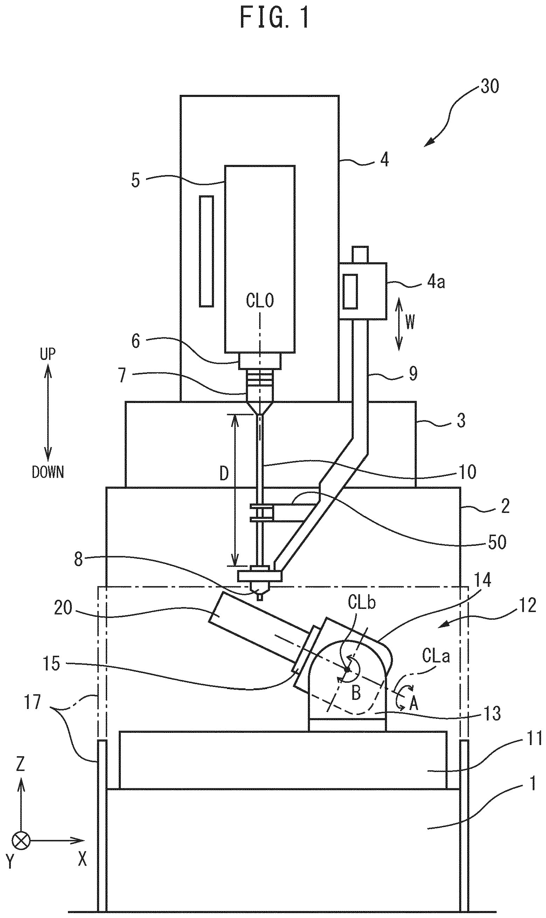

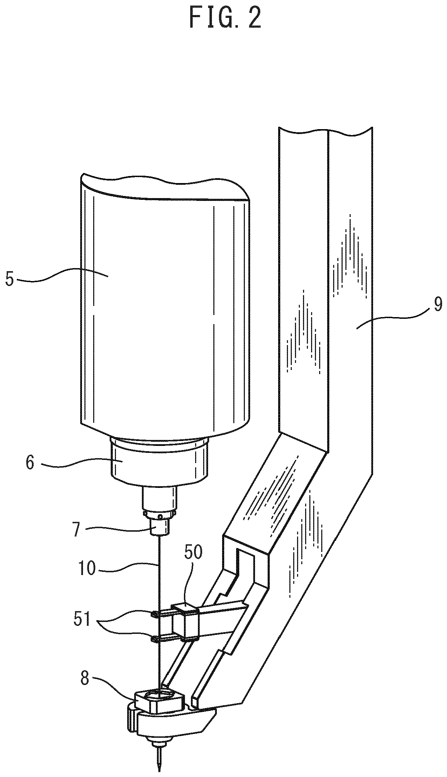

The overall configuration of a small-hole electric discharge machining machine according to an embodiment of the present invention (hereinafter referred to as an "electric discharge machining machine") will be explained below while referring to FIGS. 1 and 2. FIG. 1 is a schematic front view of the electric discharge machining machine 30 according to the present embodiment, while FIG. 2 is an enlarged perspective view of principal parts of the electric discharge machining machine 30. In the electric discharge machining machine 30 of the present embodiment, as machine coordinates, the mutually perpendicular X-axis, Y-axis, and Z-axis are set. In the following explanation, the Z-axial direction will sometimes be called the "up-down direction".

The electric discharge machining machine 30 includes a bed 1 serving as a base and a column 2 provided standing at its rear part. On the top surface of the column 2, an X-slider 3 is supported to be able to move in the X-axial direction. On the top surface of the X-slider 3, a ram 4 is supported to be able to move in the Y-axial direction. On the front surface of the ram 4, a spindle head 5 is supported to be able to move in the Z-axial direction.

On the top surface of the bed 1, a table 11 is arranged at the front from the column 2. On the top surface of the table 11, a slanted rotary table device 12 is carried. The slanted rotary table device 12 includes a pair of support members 13 arranged at the top surface of the table 11. Between the pair of support members 13, a slanted member 14 supported to be able to turn in the B-axial direction about a pivot axis CLb extending in the Y-axial direction is arranged. On the end face of the slanted member 14, a rotary table 15 supported to be able to rotate in the A-axial direction about a rotation axis CLa vertical to the pivot axis CLb is arranged.

A front end part of a rotating spindle 6 projects out from the bottom surface of the spindle head 5. At the bottom part of the rotating spindle 6, an electrode holder 7 (first support part) holding the base end side of an electrode 10 is attached. Below the electrode holder 7, an intermediate guide device 50 guiding an intermediate part of the electrode is arranged. Further below that, an electrode guide 8 (second support part) guiding and positioning the front end part of the electrode 10 is arranged. Between the electrode holder 7 and the electrode guide 8, the electrode 10 is arranged along a rotation axis CL0 of the rotating spindle 6 extending in the up-down direction. The intermediate guide device 50 is supported by a gripping arm 9 to be able to move in the up-down direction. The electrode guide 8 is gripped at the bottom end part of the gripping arm 9. The gripping arm 9 is supported to be able to move in the up-down direction at a bracket 4a provided at a side surface of the ram 4. The axis of movement of the gripping arm 9 in the up-down direction will be called the "W-axis". The W-axis of the present embodiment is parallel to the Z-axis.

As the electrode 10, in the present embodiment, a cylindrical shape pipe electrode 10 is selected. The electrode 10 has an outside diameter corresponding to the inside diameter of the hole to be formed. During the electric discharge machining, the electrode 10 is rotated by for example a high speed such as 1000 rpm about the rotation axis CL0 by rotation of the rotating spindle 6. The electrode 10 is constrained at its intermediate part at the intermediate guide device 50 so that it does not shake when rotating. An end part of the electrode 10 projecting out from the electrode guide 8 serves as a machining part for generating the electric discharge. That is, electric discharge machining is performed at the end part of the electrode 10 facing the workpiece 20. As the electric discharge machining progresses, the front end of the electrode 10 is consumed, but the spindle head 5 and gripping arm 9 descend, so the front end of the electrode 10 can be positioned at a desired position.

Inside the electric discharge machining machine 30, various types of electrodes 10 are stored set with electrode holders 7 and electrode guides 8 corresponding to their outside diameters. When changing electrodes 10, a known method is followed to automatically change to another electrode 10 together with the electrode holder 7 and electrode guide 8 by a not shown electrode changing device.

Inside of the electrode 10, for example water or another machining fluid is supplied. The machining fluid is injected from the bottom end of the electrode 10. Note that, the electrode 10 is not limited to a cylindrical shape pipe electrode. A solid electrode may also be used.

At the rotary table 15, a workpiece 20 is fastened. Around the table 11, a machining tank 17 is provided so as to surround the table 11 and slanted rotary table device 12 as a whole. The machining tank 17 is formed to be able to move in the up-down direction. When machining the workpiece, as shown by the one-dot chain line, the machining tank 17 rises. As opposed to this, when performing preparatory work or otherwise not machining, the machining tank 17 descends as shown by the solid line.

The electric discharge machining machine 30 is configured so that the electrode 10 can move relative to the workpiece 20 in the X-axial direction, Y-axial direction, and Z-axial direction. The electric discharge machining machine 30 is also configured so that the electrode 10 is formed to be able to move relative to the workpiece 20 in the B-axial direction and A-axial direction. The distance between the electrode guide 8 and the surface of the workpiece 20 can be adjusted by movement of the gripping arm 9 by an arm drive part.

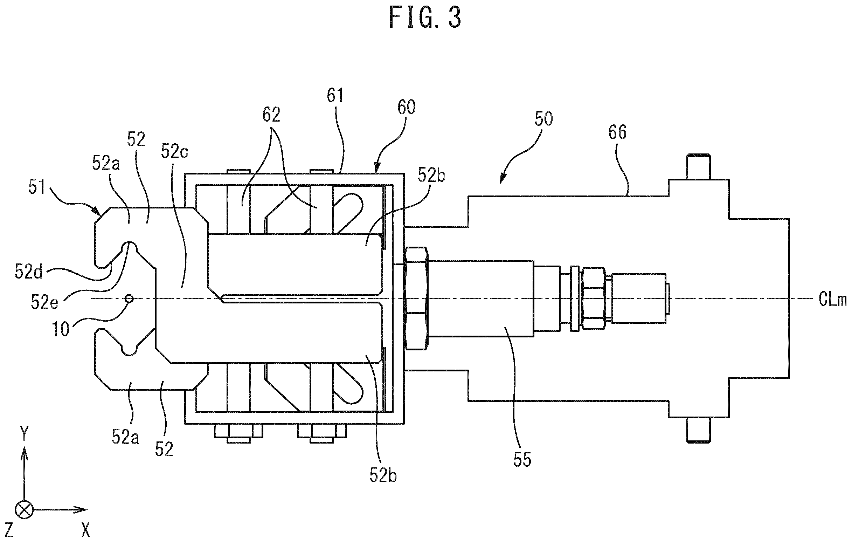

Next, the intermediate guide device 50 which the electric discharge machining machine 30 of the present embodiment comprises will be explained in detail below with reference to FIG. 3 to FIG. 6. FIG. 3 to FIG. 6 are schematic plan views with a cover removed so as to enable understanding of the arrangement of the components at the inside of the intermediate guide device 50. The X-, Y-, and Z-directions of the intermediate guide device 50 used in the explanation relating to FIG. 3 to FIG. 6 are equal to the X-, Y-, and Z-directions of the electric discharge machining machine 30 fastening the same. The intermediate guide device 50 has a central axis CLm extending in the X-direction.

The intermediate guide device 50 in the present embodiment comprises a guide part 51 guiding the electrode 10, a driving means comprised of an air cylinder 55 for making the guide part 51 move from an open state to a closed state and the reverse, a biasing means comprised of coil springs 59 acting on the guide part 51, a movement direction changing mechanism 60 changing a direction of movement between the air cylinder 55 and guide part 51 by 90 degrees, and a mounting part 66 for fastening the movement direction changing mechanism 60 and fastening to the gripping arm 9 of the electric discharge machining machine. The guide part 51 can guide an electrode 10 in the closed state and receive an electrode 10 from the outside in the open state.

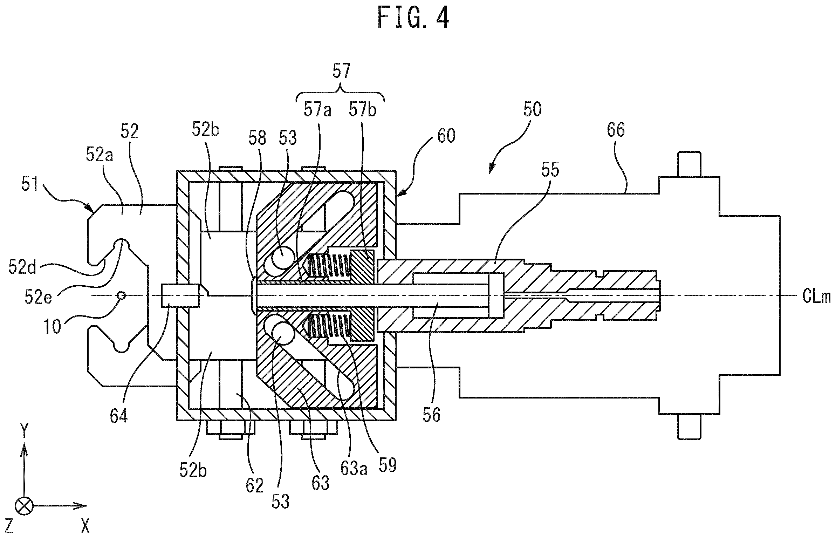

The guide part 51 comprises two pairs of openable/closable fingers 52 (in FIG. 3 to FIG. 6, only one pair is shown) at the top and bottom arranged separated from each other in the Z-direction and guide pins 53 fastened to base parts 52b of the fingers 52. FIG. 3 shows the intermediate guide device 50 when the guide part 51 is in the open state. There, the upper side pair of fingers 52 is shown. FIG. 4 also shows the intermediate guide device 50 when the guide part 51 is in the open state. In FIG. 4, to show the internal structure better, the longitudinal section on the central axis CLm is shown. As a result, in FIG. 4, the lower side pair of fingers 52 is shown.

Note that, in this Description, for simplification of the explanation, the same reference notation 52 is assigned to each of the two fingers of the symmetrical pair of fingers. Further, the upper side pair of fingers and the lower side pair of fingers differ in direction of projection of the guide pins 53, but have the same outside shapes as each other, so in this Description, again the same reference notations 52 are assigned for simplification of the explanation.

The two fingers of the pair of fingers 52 of the guide part 51 have symmetrical overall approximately Z-shapes. They have the base parts 52b extending parallel to the central axis CLm of the intermediate guide device 50 in the X-direction, front end parts 52a formed with notches 52d for holding or gripping the electrode 10, and intermediate parts 52c connecting the base parts 52b and front end parts 52a and extending perpendicular to the central axis CLm. At the base parts 52b of the fingers, holes (not shown) into which rod-shaped finger guides 62 of the movement direction changing mechanism 60 are inserted are formed in the Y-direction perpendicular to the central axis CLm. The fingers 52 are formed from a plastic material so as to impart electrical insulating ability and so as to prevent wear of the high speed rotating metal electrodes.

The notch 52d formed at the front end part 52a of the finger is formed as a substantially V-shape in the finger 52 at the lower side of the Y-direction in FIG. 3 and therefore as a substantially inverted V-shape in the finger 52 at the upper side in the Y-direction (hereinafter referred to as the "substantially V-shape") and has a semicircular notch 52e at the vertex part of the V-shape. In the present embodiment, the angle formed by the two slanted sides of the V-shape is about 90 degrees. The radius of the semicircular notch 52e is set to 1 mm.

The movement direction changing mechanism 60 has a rectangular shaped frame 61, four rod-shaped finger guides 62 fastened to the frame 61 and extending in the Y-direction, though only two are shown, a slider 63 having two elongated holes 63a arranged symmetrically about the central axis CLm and slanted by about 45 degrees (hereinafter referred to as "slanted elongated holes 63a"), the slider 63 arranged to be able to move inside the frame 61 in the X-direction, and a stopper part 64 against which a front end of a plunger 56 of the air cylinder 55 abuts when the plunger 56 is extended. The slider 63 can move in the X-direction not only with respect to the frame 61, but also with respect to the plunger 56 of the air cylinder 55.

In the slanted elongated holes 63a of the slider, the guide pins 53 sticking out from the base parts 52b of the fingers are inserted. The widths of the slanted elongated holes 63a are formed slightly larger than the diameters of the guide pins 53 so that the guide pins 53 can smoothly move inside the slanted elongated holes 63a. At the rear part of the slider 63, two spring receiving holes extending in the X-direction for receiving the front end parts of the coil springs 59 are provided symmetrically with respect to the central axis CLm. In the present embodiment, a single slider is provided between the upper side fingers 52 and lower side fingers 52. For this reason, in the slanted elongated holes 63a, not only the guide pins 53 sticking out from the lower side fingers 52, but also the guide pins 53 sticking out from the upper side fingers 52 not shown in FIG. 4 are inserted.

The stopper part 64 in the present embodiment is formed as a stud 64 which is fastened to the front wall of the frame 61. The stud 64 is arranged on the central axis CLm. Against the end sticking out inwardly from the inner surface of the front wall part of the frame 611, the front end of the plunger 56 of the air cylinder 55 abuts. The stud 64 is fastened to the frame 61 so as to enable adjustment of the amount by which it sticks out to the inside of the frame 61.

The air cylinder 55 is fastened to the rear wall part of the frame 61 so that its longitudinal direction axial line is superposed on the central axis CLm of the intermediate guide device. Further, at the air cylinder 55, a not shown air feed pipe is connected. At the plunger 56 of the air cylinder 55, a spring support member 57 is fastened. The spring support member 57 has a cylindrical mounting part 57a into which the plunger 56 is inserted and support parts 57b which extend from the rear end part of the mounting part 57a symmetrically with respect to the central axis CLm in the Y-direction and support the rear end parts of the coil springs 59. The spring support member 57 is fastened to the plunger 56 at its mounting part 57a by a fastening screw 58, only the head of which is illustrated, at the front end part of the plunger 56. The head of the fastening screw 58 has a flange part flaring to the outside from the mounting part 57a of the spring support member.

The coil springs 59, in the present embodiment, are formed by compression coil springs 59. Two are arranged in parallel with the central axis CLm and symmetrically. The coil springs 59 are arranged between the support parts 57b of the spring support member and the slider 63.

Next, how the intermediate guide device 50 operates will be explained. FIG. 4 shows when the guide part 51 is in the open state. At this time, the air cylinder 55 makes the plunger 56 retract the most. The slider 63 is pushed to the front by the coil springs 59, but its front end part is blocked from advancing by the flange part of the fastening screw 58 at the front end of the plunger 56, so it stops at the last retracted position shown in FIG. 4. The guide pins 53 sticking out from the base parts 52b of the fingers are positioned at the front sides in the slanted elongated holes 63a of the slider and at the sides near the central axis CLm.

If the air cylinder 55 makes the plunger 56 extend, that is, makes it advance, the slider 63 advances receiving the force from the plunger 56 through the spring support member 57 and coil springs 59. As the slider 63 advances, the guide pins 53 in the slanted elongated holes 63a move from their initial inside positions to outside positions. Therefore, the base parts 52b of the fingers are also guided by the finger guides 62 and move from the inside to the outside in the Y-direction and therefore the front end parts 52a of the fingers move from the initial outside positions to the inside.

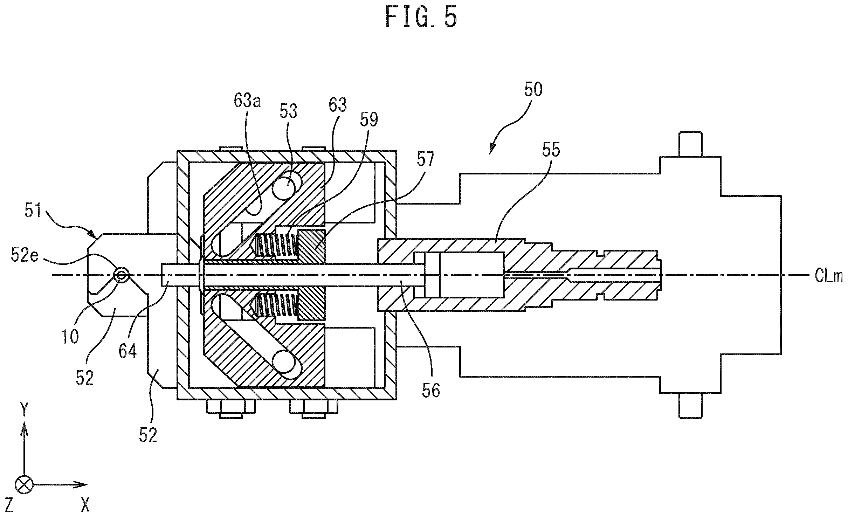

As shown in FIG. 5, if the air cylinder 55 extends the plunger 56 until the plunger 56 abuts against the stopper part 64, the guide part 51 becomes the closed state. At this time, the slider 63 is at its most advanced position, and the guide pins 53 projecting out from the base parts 52b of the fingers are positioned at the rear sides in the slanted elongated holes 63a of the slider and the furthest from the central axis CLm. As a result, the front end parts 52a of the pair of fingers are positioned at the inside most sides and therefore the guide part 51 becomes the closed state.

In the closed state, the semicircular notches 52e at the top parts of the substantially V-shaped notches 52d of the pair of fingers are combined whereby a circular guide hole is formed. In the present embodiment, the radii of the semicircular notches 52e are set to 1 mm, so the diameter of the guide hole is 2 mm. Therefore, if selecting an electrode with an outside diameter of 1 mm, as shown in FIG. 5, a clearance is formed between the inside wall of the guide hole and the electrode. The high speed rotating electrode 10 is restricted in position in the X-Y plane in the range of the guide hole of the guide part 51 in this closed state and is also guided when moving with respect to the guide part 51 in the Z-direction.

To move the guide part 51 from the closed state shown in FIG. 5 to the open state shown in FIG. 4, it is sufficient to retract the plunger 56 of the air cylinder 55. If the plunger 56 retracts, due to the flange of the fastening screw 58 at the front end part of the plunger 56, the slider 63 is moved and retracts to the position shown in FIG. 5.

When in the closed state shown in FIG. 5, the front end of the plunger 56 abuts against the stopper part 64. For this reason, the thrust generated by the air cylinder 55 acts on the frame 61 through the stopper part 64, but does not act on the guide part 51. The force generated by the coil springs 59 is supported by the flange of the fastening screw 58 of the front end of the plunger 56 through the slider 63, so again does not act on the guide part 51.

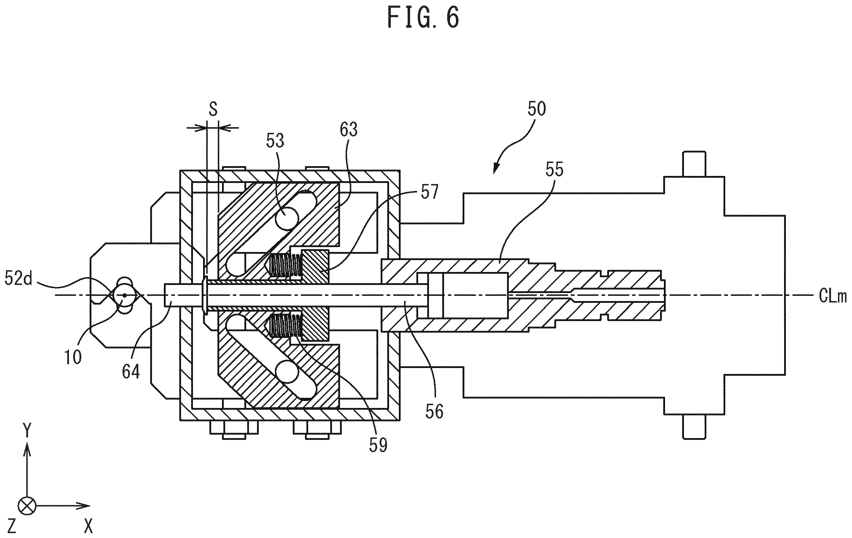

FIG. 6 is a sectional view, similar to FIG. 5, of the intermediate guide device 50 when the guide part 51 is in the closed state, but shows the case where the electrode 10 is changed to one of a relatively thick outside diameter of 3 mm. The electrode 10 in FIG. 6 is gripped by the four slanted sides of the substantially V-shaped notches 52d of the pairs of fingers 52. Further, the pairs of fingers 52 are moved to the outside from the position shown in FIG. 5 due to the thick electrode 10. For this reason, the slider 63 is retracted from the position shown in FIG. 5 by the distance S. At this time, the front end of the plunger 56 remains abutting against the stopper part 64 and the spring support member 57 is not retracted in position, so the force generated by the coil springs 59 acts on the fingers 52 through the slider 63 and guide pins 53 and therefore acts on the electrode 10. The high speed rotating electrode 10 is restricted in position in the X-Y plane by being gripped by the fingers 52 of the guide part 51 in the closed state and is guided when moving with respect to the guide part 51 in the Z-direction as well.

In the present embodiment, when the guide part 51 is in the closed state, as shown in FIG. 5, when the electrode 10 has a diameter thinner than a predetermined diameter of 2 mm equal to the diameter of the guide hole, the electrode 10 is guided by the fingers 52 in a state with a clearance formed between this and the inside wall of the guide hole. As opposed to this, as shown in FIG. 6, when the electrode 10 has the predetermined diameter of a 2 mm or more diameter, the electrode 10 is guided by being gripped by the fingers 52. At this time, the force generated by the coil springs 59 acts on the electrode 10 through the fingers 52.

For this reason, according to the intermediate guide device 50 of the present embodiment, it becomes possible to guide all the electrodes from for example a relatively thin electrode of less than a diameter of 2 mm to a relatively thick electrode of a diameter of 2 mm or more, according to the fingers 52 shown in FIG. 6, up to a maximum about 5 mm, without changing the fingers 52. When desiring to further thicken the grippable electrode 10, it is sufficient to enlarge the size of the substantially V-shaped notches 52d formed in the fingers.

According to the intermediate guide device 50 of the present embodiment, the force generated by the air cylinder 55 is used for movement of the guide part 51 between the open state and closed state, while the force generated by the biasing means comprised of the coil springs 59 is used for gripping the electrode 10. For this reason, it is possible to make the movement direction changing mechanism 60 requiring the relatively large force for operation operate sufficiently stably by the air cylinder 55, while it becomes possible to grip the electrode 10 by the optimum force using the biasing means 59 without regard as to the force required for operation of the movement direction changing mechanism 60.

Further, according to the intermediate guide device 50 of the present embodiment, when gripping the electrode 10, the distance S shown in FIG. 6 becomes greater as the electrode 10 becomes thicker in diameter, so the force which the electrode 10 receives from the coil springs 59 also becomes larger. In actuality, the electrode 10 is often slightly bent. In such a case, it is convenient if the gripping force from the fingers 52 functioning as the means for stopping the rotating electrode 10 from shaking increases as the electrode 10 becomes thicker.

In the above-mentioned embodiment, the intermediate guide device 50 had two guide parts 51 separated from each other in the Z-direction, that is, two pairs of fingers 52, but an embodiment in which the intermediate guide device 50 has one pair or three pairs or more of fingers 52 is also possible.

### Reference Signs List

7 electrode holder
8 electrode guide
10 electrode
30 small-hole electric discharge machining machine
50 intermediate guide device
51 guide part
52 fingers
52d notch
52e semicircular notch
53 guide pins
55 air cylinder
56 plunger
57 spring support member
58 fastening screw
59 coil spring
60 movement direction changing mechanism
63 slider
64 stopper part

## Claims

1. A small-hole electric discharge machining machine using a rod-shaped or pipe-shaped electrode to machine a workpiece, comprising:
a first support part supporting a base end side of the electrode;
a second support part supporting a front end side of the electrode; and
an intermediate guide device disposed between the first support part and the second support part and guiding the electrode, the intermediate guide device comprising
a guide part having an open state and closed state and guiding the electrode in the closed state,
a driving means making the guide part move between the open state and closed state, and
biasing means biasing the guide part in a closing direction when the guide part is in the closed state.

2. The small-hole electric discharge machining machine according to claim 1, wherein the intermediate guide device further comprises a stopper part for receiving a thrust of the driving means so that the thrust does not act on the guide part when the guide part is in the closed state.

3. The small-hole electric discharge machining machine according to claim 1 or 2,
wherein the guide part of the intermediate guide device comprises a pair of fingers forming the open state and the closed state, the pair of fingers also forming a guide hole for guiding the electrode by notches which they have combining in the closed state,
wherein the guide hole is formed so that a clearance is formed between an inside wall of the guide hole and the electrode when the electrode is thinner than a predetermined diameter and so that the electrode abuts against the inside wall of the guide hole when the electrode is thicker than the predetermined diameter, and
wherein when the electrode is thicker than the predetermined diameter, the biasing force of the biasing means acts on the electrode through the pair of fingers.
